# EUROPEAN PATENT SPECIFICATION

(11) **EP 2 474 137 B1**
(45) Date of publication and mention of the grant of the patent: **23.04.2014**
(21) Application number: 10759730.4
(22) Date of filing: 31.08.2010
(51) Int. Cl.: H04L 12/58, G06Q 30/00, G06Q 30/02

(54) **METHOD AND NETWORK NODE FOR DEFERRING A TRANSMISSION OF A MESSAGE COMPRISING AN ADVERTISEMENT COMPONENT**
VERFAHREN UND NETZWERKKNOTEN ZUR VERZÖGERUNG EINER ÜBERTRAGUNG EINER NACHRICHT MIT EINER WERBEKOMPONENTE
PROCÉDÉ ET NOEUD RÉSEAU DE REPORTER D'UNE TRANSMISSION D'UN MESSAGE COMPRENANT UNE COMPOSANTE PUBLICITAIRE

(30) Priority: 31.08.2009 US 550725
(43) Date of publication of application: 11.07.2012
(73) Proprietor: Telefonaktiebolaget LM Ericsson (publ), 164 83 Stockholm (SE)
(72) Inventor: GAVITA, Edoardo, Laval Québec H7M 4N4 (CA)
(74) Representative: Röthinger, Rainer
(86) International application number: PCT/IB2010/053908
(87) International publication number: WO 2011/024155

(56) References cited:
- EP-A1- 2 046 079
- WO-A1-2009/010633
- WO-A2-2008/011341
- US-A1- 2007 168 483

## Description

### TECHNICAL FIELD

The present invention relates to the field of messaging and more particularly to the transmission of a message comprising an advertisement component.

### BACKGROUND

Today, messaging is omnipresent. The quantity of Short Message Service (SMS), Multimedia Messaging Service (MMS), emails and other multimedia content exchanged between users of mobile user devices is very important and is still growing.

The availability of this multitude of messaging means opens the door to multimedia advertisement and content targeting. Advertisements (Ads) for displaying in a mobile device, for example, can be targeted as the identity and the location of a user device can be inferred. Further, the content of messages communicated through the mobile device offers a great source of information useful for targeted advertising.

It is therefore possible today to receive Ads that are targeted according to message content or to a user's profile or location, for example. However, while a mobile device is roaming, the costs of receiving these messages increase dramatically.

EP 2 046 079 A1 teaches a technique for managing delivery of advertisements to mobile telephone subscribers. Delivery to a roaming subscriber is prevented or blocked when the subscriber is determined to be using a roaming network. In one implementation, an advertisement management system stores messages being sent to a subscriber during a suspension period due to roaming. Once the subscriber is subsequently determined to be using the home communications network, these messages are then delivered to the subscriber.

WO 2008/011341 A2 teaches an approach for targeted advertising. Targeting may be periodically updated by deleting advertising campaigns that have expired (i.e., are no longer actively run by the advertiser), inserting new advertising campaigns and removing poorly performing advertising campaigns.

Further prior art can be found in WO 2009/010633 A1, which relates to the delivery of advertisements in a mobile advertising system.

### SUMMARY

It is therefore a general object of this invention to provide a method and network node for overcoming at least some of the prior art drawbacks.

According to the present invention, a method for deferring a transmission of a message comprising a device-specific advertisement according to claim 1 and a corresponding network node according to claim 5 are provided.

According to an aspect of the present disclosure, a method, executed in a network node, for deferring a transmission of a message comprising an advertisement (Ad) component is provided. The method comprises the steps of detecting that a target device for the message is roaming and that a deferring option is active for the target device and storing the message with the Ad component. The method comprises, after the step of storing, receiving a notification indicating that the target device is not roaming and if the Ad component is valid, sending the message to the target device, else if the Ad component is not valid, retrieving a new Ad, updating the message with the new Ad and sending the message to the target device.

According to another aspect of the present disclosure, a method executed in a network node, for deferring a transmission of a message comprising an advertisement (Ad) component is provided. The method comprises the steps of detecting that a first target device for the message is roaming and that a deferring option is active for the first target device and storing the message with the Ad component. The method comprises, after the step of storing, receiving a notification indicating that a second target device is not roaming, and if the Ad component is valid, sending the message to the second target device, else if the Ad component is not valid, retrieving a new Ad, updating the message with the new Ad and sending the message to the second target device.

According to another aspect of the present disclosure, a network node for deferring a transmission of a message comprising an advertisement (Ad) component is provided. The network node comprises a first interface in communication with other network nodes, said first interface detecting if a target device for the message is roaming, detecting if a deferring option is active for the target device and receiving a notification indicating that the target device is not roaming. The network node further comprises a database for storing the message with the Ad component, when the first interface detects that the target device is roaming and that the deferring option is active for the target device. The network node further comprises a second interface in communication with an Ad server, for retrieving a new Ad and a processing module for verifying if the Ad component stored in the database is valid, for retrieving a new Ad using the second interface and for updating the message with the new Ad if the Ad component stored in the database is not valid, when a notification indicating that the target device is not roaming is received by the first interface. The network node further comprises a third interface, in communication with the target device, for sending the message with the Ad component to the target device.

According to another aspect of the present disclosure, a network node for deferring a transmission of a message comprising an advertisement (Ad) component is provided. The network node comprises a first interface in communication with other network nodes, said first interface detecting if a first target device for the message is roaming, detecting if a deferring option is active for the first target device and receiving a notification indicating that a second target device is not roaming. The network node further comprises a database for storing the message with the Ad component, when the first interface detects that the first target device is roaming and that the deferring option is active for the first target device. The network node further comprises a second interface in communication with an Ad server, for retrieving a new Ad and a processing module for verifying if the Ad component stored in the database is valid, for retrieving a new Ad using the second interface and for updating the message with the new Ad if the Ad component stored in the database is not valid, when a notification indicating that the second target device is not roaming is received by the first interface. The network node further comprises a third interface, in communication with the second target device, for sending the message with the Ad component to the second target device.

### BRIEF DESCRIPTION OF THE DRAWINGS

The objects and advantages of the invention will be understood by reading the detailed description in conjunction with the figures, wherein:
figure 1 is a flowchart illustrating an exemplary method according to the invention;
figure 2 is a block diagram illustrating an exemplary network node according to the invention;
figure 3 is a block diagram illustrating nodes of a network, according to an exemplary embodiment of the invention; and
figure 4 is a block diagram illustrating nodes of a network, according to an exemplary embodiment of the invention.

### DETAILED DESCRIPTION

The various features of the invention will now be described with reference to the figures. These various aspects are described hereafter in greater detail in connection with exemplary embodiments and examples to facilitate an understanding of the invention, but should not be construed as limited to these embodiments. Rather, these embodiments are provided so that the disclosure will be thorough and complete, and will fully convey the scope of the invention to those skilled in the art.

The embodiments according to the present invention are described with reference to block diagrams and/or operational illustrations of methods, servers, and computer program products. It is to be understood that each block of the block diagrams and/or operational illustrations, and combinations of blocks in the block diagrams and/or operational illustrations, can be implemented by radio frequency, analog and/or digital hardware, and/or computer program instructions. Thus, the various aspects of the invention may be embodied in many different forms, and all such forms are contemplated to be within the scope of the invention. The computer program instructions may be provided to a processor circuit of a general purpose computer, special purpose computer, ASIC, and/or other programmable data processing apparatus, such that the instructions, which execute via the processor of the computer and/or other programmable data processing apparatus, create means for implementing the functions/ acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Furthermore, in some illustrations, some blocks may be optional and may or may not be executed.

When a user has subscribed to an advertisement (Ad) service, he usually receives a messages as originally sent by a sender, accompanied with an Ad component which has been inserted by the Ad service, after the message was sent. This happens regardless of whether the recipient is roaming or not. Generally, a user has no control of the content of the Ads received in terms of their sizes. Therefore, expensive costs from downloading large Ad messages, while roaming, may be incurred.

The present invention proposes an Ad service which may be set-up such that the user receives messages with their Ads components, sent while the user was roaming, at a later time when he is not roaming anymore.

The present invention therefore proposes to store the message with the original Ad in a database while a user is roaming. When the recipient is not roaming anymore, the message is retrieved from the database and sent to the user. However, before the message is sent, the validity of the Ad component is verified and, if necessary a new Ad is fetched and incorporated to the message, thus replacing the original Ad.

In order to do that, the message is first stored, with its AD component, when the recipient is roaming, unavailable or unwilling to take the message. Then, a verification of the Ad is made to determine if it is still valid, when the recipient comes online and is not roaming anymore. The verification consists of revisiting the integrity of the AD in terms of content and time criteria and also to select the appropriate AD in reference to the user device, in the case where the recipient has registered multiple user devices and uses a device different from the one to which the message was originally directed to, to receive the stored message.

The present invention proposes to re-use existing mobile notification mechanisms such as Home Location Register (HLR) Alert-SC, Location Based Service Spatial Triggers and SIP REGISTER Event packages, to notify a node of the network when the recipient has just entered the network i.e. the user is no longer roaming or unavailable. The present invention also introduces a new notification function to initiate a process to send out any deferred messages along with an 'updated' AD component, if necessary. This new notification indicator indicates to a network node to fetch the message and also to fetch an updated Ad component to be sent with the message. For the user, this should be done in a transparent way.

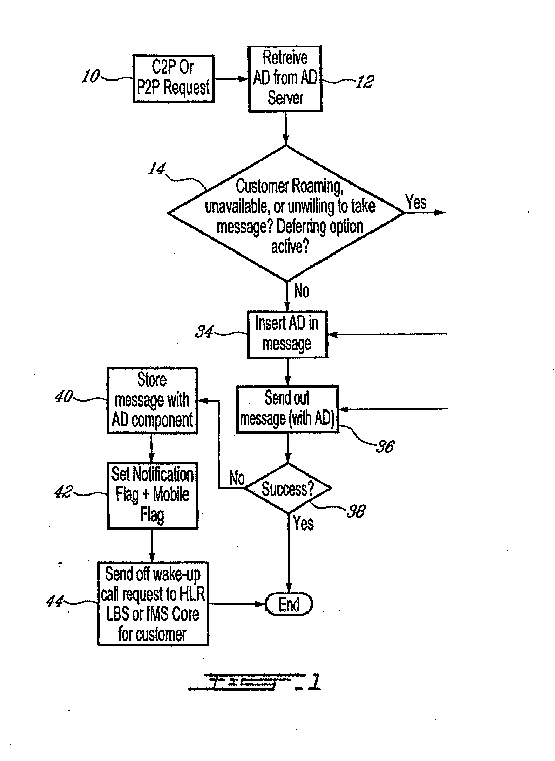

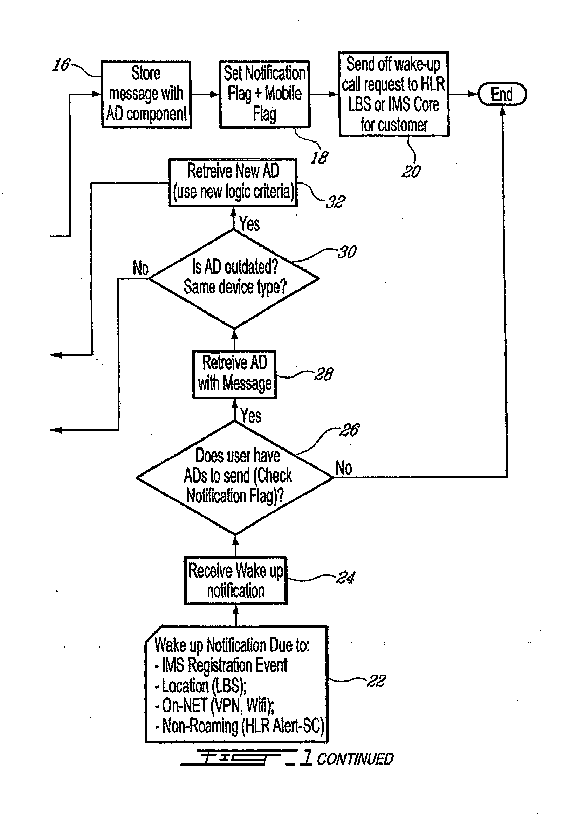

Reference is now being made to figure 1, where a method, executed in a network node, for deferring a transmission of a message comprising an advertisement (Ad) component is illustrated. The method starts with the reception of a content server (C2P) or peer-to-peer (P2P) request, step 10. The content of the request, which in many instances may contain a message, is then processed and a targeted Ad is retrieved from an Ad server, step 12. The step 14 of detecting that a target device for the message is roaming and that a deferring option is active for the target device is then executed. A deferring option is an option allowing a user to instruct a network node, for example, to keep a message in a database while the user is roaming or unavailable and to send it later when the user stops roaming or becomes available. If it is determined that the device is roaming and the deferring option is active, the step 16 of storing the message with the Ad component is executed. Optionally, the step 18 of setting a notification flag indicative that a message with an Ad is stored and the step of setting a flag indicating a device type of the first target device are executed. Optionally, the step 20 of sending a notification request to another network node for receiving a notification indicating that the target device is not roaming is executed.

After the step 16 of storing, the steps 22 and 24, of receiving a notification indicating that the target device is not roaming are executed. This notification may be generated, for example, when a user enters an area covered by the operator of the cellular network to which he subscribes, and where no roaming fees are charged. At step 26, optionally, it is verified if a message is stored and the message with its Ad component are retrieved at step 28. At step 30, it is verified if the Ad component is valid. If the Ad is invalid or outdated or if the device connected is not of the same type as the type identified by the flag indicating a device type, then step 32 of retrieving a new Ad is executed. Step 34 of updating the message with the new Ad is then executed. On the other hand, if the Ad is valid and a device has the same type as the flag indicating a device type, the step 36 of sending the message to the target device is executed.

Other optional steps 38 to 44 of verifying if the message transmission was a success and of taking corrective measures otherwise may also be executed.

In order to verify if an Ad is valid, various verifications may be executed. Among these, a verification of the validity period of the Ad, compared with the current date may be executed. Therefore, if the current date is outside the validity period of the original Ad component of the message, this Ad may be replaced with an Ad which is valid at the current date and time. Similarly, if the devices to which the original message was sent was a mobile device, for instance, and the device on which the message is retrieved is a fixed device, the Ad may be replaced by an Ad directed to users of fixed device instead of an Ad directed to users of mobile devices. One of ordinary skills in the art will readily understand that many different verifications may be made and all these verifications, such as of the location of the device, the history of message downloads on the device, etc. are meant to be included in the present invention.

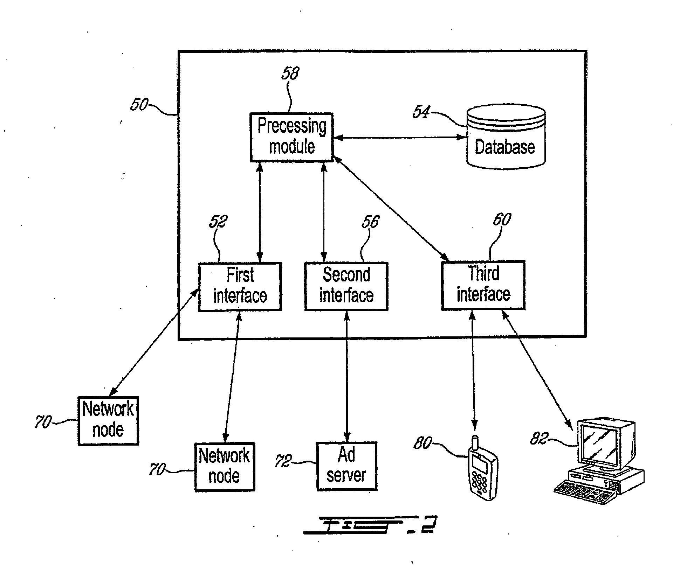

Reference is now being made to figure 2, where a network node 50 fordeferring a transmission of a message comprising an Ad component is provided. The network node 50 comprises a first interface 52 in communication with other network nodes 70. The first interface 52 is able to detect if a target device 80 for the message is roaming. The first interface 52 is also able to detect if a deferring option is active for the target device 80 and to receive a notification indicating that the target device 80 is not roaming.

The network node 50 further comprises a database 54 for storing the message with the Ad component, when the first interface 52 detects that the target device is roaming and that the deferring option is active for the target device. The network node 50 further comprises a second interface 56 in communication with an Ad server 72, for retrieving a new Ad. The network node 50 comprises a processing module 58 for verifying if the Ad component stored in the database 54 is valid, for retrieving a new Ad using the second interface 56 and for updating the message with the new Ad if the Ad component stored with the message in the database 54 is not valid, when a notification indicating that the target device is not roaming is received by the first interface. The network node 50 further comprises a third interface 60, in communication with the target device 80, for sending the message with the Ad component to the target device 80.

Still referring to figure 2, according to another aspect of the invention, a network node 50 mayreceive a notification indicating that a second target device 82 is not roaming and is available or is requesting to receive the message. When the notification is received, the third interface 60, in communication with the second target device 82, may send the message with the Ad component to the second target device 82. As explained previously, in such a case, the Ad component of the message will likely be updated prior to sending, in order to adapt it better to the type of the second target device 82.

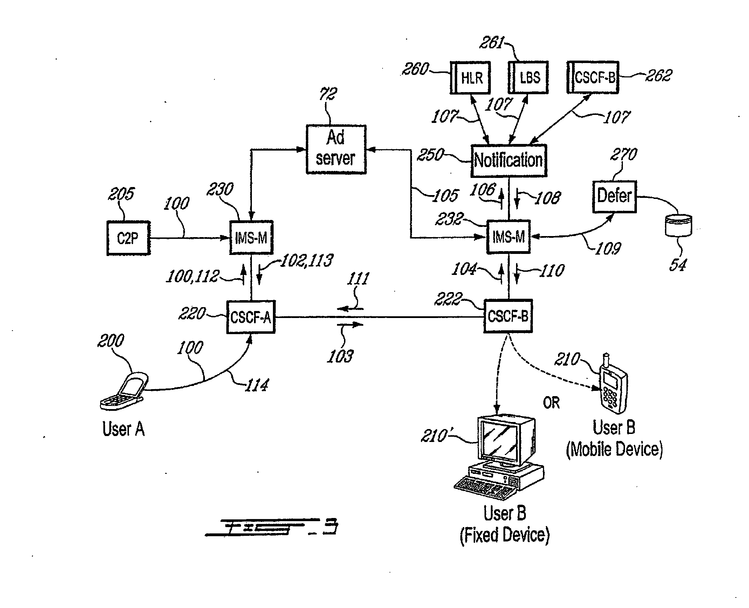

Reference is now being made to figure 3, which shows how the method of the invention may be executed by an exemplary embodiment of the invention implemented in an Internet Protocol (IP) Multimedia Subsystem (IMS) system. This example illustrates how an IMS user or a content server may send an IMS message to an IMS unregistered recipient i.e. a roaming or not currently available recipient. The message accompanied by an Ad component is deferred i.e. stored in a database, and when the recipient comes back online i.e. when an event package shows that he/she is available, the system attempts to send him the message with the Ad component. Before sending the message, however, some verifications are made. A verification regarding if the new Ad deferring feature is active may be made, a verification regarding if the Ad is still applicable, from a content or time-based perspective, may be made and if required a new Ad may be fetched from an Ad server. A verification regarding if the Ad is specific for a mobile, for a fixed device or for both types of devices may also be made. If the Ad is device specific, a further verification may be made regarding if the Ad applicable for to the recipients device which is now registered, as some Ads may be directed to fixed devices, while other Ads may be directed to mobile devices. According to the result of the verification, it may be necessary to fetch a new Ad.

Figure 3 shows an example where a message is sent from User A 200 and is stored in a database 54 to defer the sending of the message to its recipient. At step 100, User A 200 or a Content Server 205 sends an IMS message to User B 210 or 210' who is unregistered from the IMS network. i.e. roaming or unavailable. At steps 102 and 103, the IMS message is forwarded from the IMS Messaging Server (IMS-M) 230, which may fetch an Ad from the Ad server 72 and insert it into the message, to the terminating Call Session Control Function (CSCF) 222, through CSCF 220 for further analysis. At step 104, the IMS-M 232 on the terminating side receives the IMS message and performs internal verification to see if the recipient is online. If the recipient is registered, then the IMS-M 232 sends out the message to the recipient. However, in this example, User B's devices 210, 210' are roaming or unavailable so the message is deferred.

At step 105, the IMS-M 232 issues a request to the Ad Server 72 to retrieve an Ad component to be inserted into the message, for example when a recipient is roaming or not currently available. The IMS-M 232 sends the request to the Notification function 250 at step 106 to verify if the recipient has the Ad deferring option. It has to be understood that the Notification function 250 may be implemented in software or hardware and that it can be collocated with another node of the network. If the recipient has the Ad deferring option, the Notification function 250 sets a 'Notify Flag' to TRUE (this flag is set by default to FALSE). In addition, the Notification function 250 verifies if the IMS message was sent by a mobile device or by a fixed device and set the 'Mobile Flag' accordingly (this flag is set by default to TRUE). In this example, the 'Mobile Flag' is set to TRUE because the Notification function 250 is configured to use the type of device of the device used to send the message, to set the type of the recipient device, assuming that they are both of the same type. However, it should be noted that the system can be configured in many different ways and that a preferred type of device for the recipient could be used to set the 'Mobile Flag' or the flag could also be set to a fixed value. As a person skilled in the art would readily understand this is totally configurable.

At step 107, in the case where an enabler has to be triggered for the notification service in order to tell IMS-M 232 that the user has just registered i.e., in the HLR case using the Alert-SC or in the LBS case using the Spatial Trigger, the Notification function 250 also sends a notify message out to the enabler 260, 261, 262. This step is not necessary in the IMS case since the CSCF 220 also receives the register event when the IMS user registers.

At step 108, the IMS-M 232 receives the Notification flag data from the Notification function 250. At step 109, the IMS-M 232 stores the message with the Ad component and the notification flag data that was set in step 6, in the database 54 through a Defer function 270. It has to be understood that the Defer function 270 may be implemented in software or hardware and that it can be collocated with another node of the network. At steps 110, 111, 112, 113 and 114, once the message is successfully stored, a '202 Accepted' message is sent back to the originating CSCF 220.

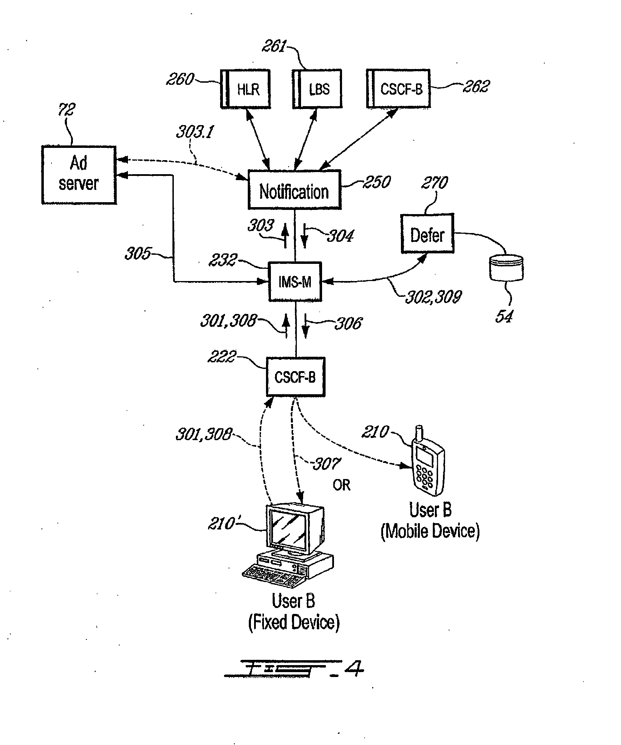

Reference is now being made to figure 4, which shows how the method of the invention may be executed by an exemplary embodiment of the invention implemented in an IMS system. This example illustrates how a deferred message may be send to its recipient when this one becomes available or stops roaming. At step 301, the recipient User B 210' registers with his fixed device 210' by sending a SIP SUBSCRIBE message. The CSCF 222 receives the SIP SUBSCRIBE messages (which contains the event package) and relays it to the IMS-M 232 at step 301. The IMS-M 232 knows that User B has registered and that it should proceed to check if the User B has the deferring function active. If so, the IMS-M 232 verifies if there are any messages waiting for User B 210'.

At step 303, the IMS-M 232 uses the new Notification function 250 to determine if the retrieved message(s) which also contain Ad component(s) need to be updated or not from an Ad component perspective. This means that the Notification function 250 verifies if the 'Notify Flag' is set to TRUE and may also issue a request to the Ad server 72, at step 303.1, to verify the Ad validity. The step 303.1 is optional. Once this verification is done, the Notification function 250 also verifies the value of the 'Mobile Flag'. In this example, the Ad component is still applicable from content and time perspectives, so no new Ad should be retrieved from the Ad server 72. However, the original message was stored and set for a mobile device 210 and not for a fixed device 210'. User B has now registered with his fixed device 210'. As a result, the Notification function 250 determines if a new Ad for the fixed device has to be retrieved. At step 304, the Notification function 250 returns a 'Retrieve New Fixed AD' response to the IMS-M 232, including the recipient's URL and any other pertinent information.

At step 305 the IMS-M 232 receives the response from the Notification function 250 and immediately proceed to fetch a new Ad for User B 210', from the Ad Server 72, which is specific to User B's fixed device 210'. It is assumed that the Ad Server 72 contains multiple versions of Ads and more specifically, different Ads for mobile and fixed devices.

Once the IMS-M 232 successfully receives the new Ad, it removes the old Ad from the message and replaces it with the new Ad. The message is then send to the CSCF 222. At step 306, the CSCF 222 receives the new message and forwards it to the User B fixed device 210'. At step 307, User B receives the new message with the Ad component. User B's fixed device 210' then returns a 200 OK response at step 308. Once the IMS-M 232 receives positive acknowledgement of message reception, the IMS-M 232 removes the message from the database 54 via Defer function 270, at step 309.

The invention has been described with reference to particular embodiments. However, it will be readily apparent to those skilled in the art that it is possible to embody the invention in specific forms other than those of the embodiments described above. The described embodiments are merely illustrative and should not be considered restrictive in any way. The scope of the invention is given by the appended claims, rather than the preceding description, and all variations and equivalents that fall within the range of the claims are intended to be embraced therein.

## Claims

1. A method, executed in a network node (50), for deferring a transmission of a message comprising a device-specific advertisement (Ad) component, comprising the steps of:
a) detecting that a first target device (80), associated with a user, for the message is roaming and that a deferring option is active for the first target device (80);
b) storing the message with the Ad component;
**characterised by**
c) after step b), receiving a notification indicating that a second target device (82) associated with the user is not roaming; and
d) verifying if the stored Ad component is valid by verifying if a current device type of the second target device (82) corresponds to a device type for which the Ad component is valid and, if the Ad component is not valid, retrieving a new Ad component adapted to the device type of the second target device (82), updating the message with the new Ad component and sending the message to the second target device (82).

2. The method of claim 1, wherein, if the Ad component is valid and if a current device type of the second target device (82) corresponds to a device type for which the Ad component is valid, the method comprises sending the message to the second target device (82).

3. The method of claim 1, further comprising, between steps b) and c), the step of setting a flag indicating a device type of the first target device (80) and sending a notification request to another network node, for receiving a notification indicating that the second target device (82) is not roaming.

4. The method of claim 3, wherein, if the Ad component is not valid and if a current device type of the second target device (82) does not correspond to a device type indicated by the flag, the steps of retrieving a new Ad component, updating the message with the new Ad component and sending the message to the second target device (82) are performed.

5. A network node (50) for deferring a transmission of a message comprising a device-specific advertisement (Ad) component, comprising:
- a first interface (52) in communication with other network nodes (70), said first interface (52) detecting if a first target device (82), associated with a user, for the message is roaming, detecting if a deferring option is active for the first target device (82) and receiving a notification indicating that a second target device (82) associated with the user is not roaming;
- a database (54) for storing the message with the Ad component, when the first interface (52) detects that the first target device (80) is roaming and that the deferring option is active for the first target device (80);
- a second interface (56) in communication with an Ad server (72), for retrieving a new Ad component;
- a processing module (58) for verifying if the Ad component stored in the database (54) is valid by verifying if a current device type of the second target device (82) corresponds to a device type for which the Ad component is valid, for retrieving a new Ad component using the second interface (56) and for updating the message with the new Ad component if the Ad component stored in the database (54) is not valid, when a notification indicating that the second target device (82) is not roaming is received by the first interface (52);
- a third interface (60), in communication with the second target device (82), for sending the message with the Ad component to the second target device (82).

6. The network node of claim 5, wherein the first interface (52) further sets a flag indicating a device type of the first target device (80) and sends a notification request to another network node (70) for receiving a notification indicating that the second target device (82) is not roaming.

7. The network node of claim 6, wherein the processing module (58) retrieves a new Ad component using the second interface (56), if a current device type of the second target device (82) does not correspond to a device type indicated by the flag.

## Patentansprüche

1. Verfahren, das in einem Netzwerkknoten (50) ausgeführt wird, zur Verzögerung einer Sendung einer Nachricht, die eine vorrichtungsspezifische Werbungs- (Ad) -Komponente umfasst, umfassend die Schritte:
a) Erfassen, dass eine erste Zielvorrichtung (80), die mit einem Benutzer assoziiert ist, für die Nachricht sich in einem Roaming-Zustand befindet und dass eine Verzögerungsoption aktiv ist für die erste Zielvorrichtung (80);
b) Speichern der Nachricht mit der Ad-Komponente;
**gekennzeichnet durch**
c) nach Schritt b), Empfangen einer Benachrichtigung, die angibt, dass eine zweite Zielvorrichtung (82), die mit dem Benutzer assoziiert ist, sich nicht in einem Roaming-Zustand befindet; und
d) Verifizieren, ob die gespeicherte Ad-Komponente gültig ist **durch** Verifizieren, ob ein momentaner Vorrichtungstyp der zweiten Zielvorrichtung (82) einem Vorrichtungstyp entspricht, für den die Ad-Komponente gültig ist, und falls die Ad-Komponente nicht gültig ist, Holen einer neuen Ad-Komponente, die für den Vorrichtungstyp der zweiten Zielvorrichtung (82) eingerichtet ist, Aktualisieren der Nachricht mit der neuen Ad-Komponente und Senden der Nachricht zu der zweiten Zielvorrichtung (82).

2. Verfahren gemäß Anspruch 1, wobei, falls die Ad-Komponente gültig ist und falls ein momentaner Vorrichtungstyp der zweiten Zielvorrichtung (82) einem Vorrichtungstyp entspricht, für den die Ad-Komponente gültig ist, das Verfahren Senden der Nachricht zu der zweiten Zielvorrichtung (82) umfasst.

3. Verfahren gemäß Anspruch 1, weiterhin umfassend, zwischen Schritten b) und c), den Schritt des Setzens einer Flagge, die einen Vorrichtungstyp der ersten Zielvorrichtung (80) angibt, und des Sendens einer Benachrichtigungsanforderung zu einem anderen Netzwerkknoten zum Empfangen einer Benachrichtigung, die angibt, dass sich die zweite Zielvorrichtung (82) nicht in dem Roaming-Zustand befindet.

4. Verfahren gemäß Anspruch 3, wobei, falls die Ad-Komponente nicht gültig ist und falls ein momentaner Vorrichtungstyp der zweiten Zielvorrichtung (82) nicht einem Vorrichtungstyp entspricht, der durch die Flagge angegeben ist, die Schritte des Holens einer neuen Ad-Komponente, Aktualisierens der Nachricht mit der neuen Ad-Komponente und Sendens der Nachricht zu der zweiten Zielvorrichtung (82) durchgeführt werden.

5. Netzwerkknoten (50) zur Verzögerung einer Sendung einer Nachricht, die eine vorrichtungsspezifische Werbungs- (Ad) -Komponente umfasst, umfassend:
- eine erste Schnittstelle (52) in Kommunikation mit anderen Netzwerkknoten (70), wobei die erste Schnittstelle (52) erfasst, ob eine erste Zielvorrichtung (82), die mit einem Benutzer assoziiert ist, für die Nachricht sich in einem Roaming-Zustand befindet, erfasst, ob eine Verzögerungsaktion für die erste Zielvorrichtung (82) aktiv ist, und eine Benachrichtigung empfängt, die angibt, dass die zweite Zielvorrichtung (82), die mit dem Benutzer assoziiert ist, sich nicht in einem Roaming-Zustand befindet;
- eine Datenbank (54) zum Speichern der Nachricht mit der Ad-Komponente, wenn die erste Schnittstelle (52) erfasst, dass sich die erste Zielvorrichtung (80) in einem Roaming-Zustand befindet und dass die Verzögerungsoption für die erste Zielvorrichtung (80) aktiv ist;
eine zweite Schnittstelle (56) in Kommunikation mit einem Ad-Server (72) zum Holen einer neuen Ad-Komponente;
ein Verarbeitungsmodul (58) zum Verifizieren, ob die in der Datenbank (54) gespeicherte Ad-Komponente gültig ist durch Verifizieren, ob ein momentaner Vorrichtungstyp der zweiten Zielvorrichtung (82) einem Vorrichtungstyp entspricht, für den die Ad-Komponente gültig ist, zum Holen einer neuen Ad-Komponente unter Verwendung der zweiten Schnittstelle (56) und zum Aktualisieren der Nachricht mit der neuen Ad-Komponente, falls die in der Datenbank (54) gespeicherte Ad-Komponente nicht gültig ist, wenn eine Benachrichtigung, die angibt, dass die zweite Zielvorrichtung (82) sich nicht in einem Roaming-Zustand befindet, durch die erste Schnittstelle (52) empfangen wird;
- eine dritte Schnittstelle (60) in Kommunikation mit der zweiten Zielvorrichtung (82) zum Senden der Nachricht mit der Ad-Komponente zu der zweiten Zielvorrichtung (82).

6. Netzwerkknoten gemäß Anspruch 5, wobei die erste Schnittstelle (52) weiterhin eine Flagge setzt, die einen Vorrichtungstyp der ersten Zielvorrichtung (80) angibt und eine Benachrichtigungsanforderung zu einem anderen Netzwerkknoten (70) sendet zum Empfangen einer Benachrichtigung, die angibt, dass die zweite Zielvorrichtung (80) sich nicht in einem Roaming-Zustand befindet.

7. Netzwerkknoten gemäß Anspruch 6, wobei das Verarbeitungsmodul (58) eine neue Ad-Komponente unter Verwendung der zweiten Schnittstelle (56) holt, falls ein momentaner Vorrichtungstyp der zweiten Zielvorrichtung (82) nicht einem Vorrichtungstyp entspricht, der durch die Flagge angegeben ist.

## Revendications

1. Procédé, exécuté dans un noeud de réseau (50), pour reporter une transmission d'un message comprenant une composante publicitaire (Ad) spécifique à un dispositif, comprenant les étapes consistant à :
a) détecter qu'un premier dispositif cible (80), associé à un utilisateur, pour le message est en itinérance et qu'une option de report est active pour le premier dispositif cible (80) ;
b) stocker le message avec la composante Ad ;
**caractérisé par**
c) après l'étape b), recevoir une notification indiquant qu'un second dispositif cible (82) associé à l'utilisateur n'est pas en itinérance ; et
d) vérifier si la composante Ad stockée est valide en vérifiant si un type de dispositif courant du second dispositif cible (82) correspond à un type de dispositif pour lequel la composante Ad est valide et, si la composante Ad n'est pas valide, extraire une nouvelle composante Ad adaptée au type de dispositif du second dispositif cible (82), mettre à jour le message avec la nouvelle composante Ad et envoyer le message vers le second dispositif cible (82).

2. Procédé selon la revendication 1 comprenant, si la composante Ad est valide et si un type de dispositif courant du second dispositif cible (82) correspond à un type de dispositif pour lequel la composante Ad est valide, le procédé comprend envoyer le message au second dispositif cible (82).

3. Procédé selon la revendication 1, comprenant en outre, entre les étapes b) et c), l'étape de régler un fanion indiquant un type de dispositif du premier dispositif cible (80) et envoyer une demande de notification vers un autre noeud de réseau, pour recevoir une notification indiquant que le second dispositif cible (82) n'est pas en itinérance.

4. Procédé selon la revendication 3, comprenant, si la composante Ad n'est pas valide et si un type de dispositif courant du second dispositif cible (82) ne correspond pas à un type de dispositif indiqué par le fanion, les étapes d'extraire une nouvelle composante Ad, de mettre à jour le message avec la nouvelle composante Ad et d'envoyer le message au second dispositif cible (82) sont exécutés.

5. Noeud de réseau (50) pour reporter une transmission d'un message comprenant une composante publicitaire (Ad) spécifique à un dispositif, comprenant :
- une première interface (52) en communication avec d'autres noeuds de réseau (70), ladite première interface (52) détectant si un premier dispositif cible (82), associé à un utilisateur, pour le message est en itinérance, détectant si une option de report est active pour le premier dispositif cible (82) et recevant une notification indiquant qu'un second dispositif cible (82) associé à l'utilisateur n'est pas en itinérance ;
- une base de données (54) pour stocker le message avec la composante Ad, quand la première interface (52) détecte que le premier dispositif cible (80) est en itinérance et que l'option de report est active pour le premier dispositif cible (80) ;
- une seconde interface (56) en communication avec un serveur AD (72), pour extraire une nouvelle composante Ad ;
- un module de traitement (58) pour vérifier si la composante Ad stockée dans la base de données (54) est valide en vérifiant si un type de dispositif courant du second dispositif cible (82) correspond à un type de dispositif pour lequel la composante Ad est valide, pour extraire une nouvelle composante Ad en utilisant la seconde interface (56) et pour mettre à jour le message avec la nouvelle composante Ad si la composante Ad stockée dans la base de données (54) n'est pas valide, quand une notification indiquant que le second dispositif cible (82) n'est pas en itinérance est reçue par la première interface (52) ;
- une troisième interface (60) en communication avec le second dispositif cible (82), pour envoyer le message avec la composante Ad au second dispositif cible (82).

6. Noeud de réseau selon la revendication 5, dans lequel la première interface (52) règle en outre un fanion indiquant un type de dispositif du premier dispositif cible (80) et envoie une demande de notification à un autre noeud de réseau (70) pour recevoir une notification indiquant que le second dispositif cible (82) n'est pas en itinérance.

7. Noeud de réseau selon la revendication 6, dans lequel le module de traitement (58) extrait une nouvelle composante Ad utilisant la seconde interface (56), si un type de dispositif courant du second dispositif cible (82) ne correspond pas à un type de dispositif indiqué par le fanion.
